# EUROPÄISCHE PATENTSCHRIFT

(11) **EP 1 499 034 B1**
(45) Veröffentlichungstag und Bekanntmachung des Hinweises auf die Patenterteilung: **19.12.2007**
(21) Anmeldenummer: 04012310.1
(22) Anmeldetag: 25.05.2004
(51) Int. Cl.: H04B 5/00, G06K 7/00, G06K 19/07

(54) **Schaltungsanordnung und Verfahren zur Phasenmodulation für rückstreubasierte Transponder**
Circuit and method for phase modulation of transponders based on backscattering
Circuit et procédé de modulation de phase de transpondeurs à retrodiffusion

(30) Priorität: 28.05.2003 DE 10325396
(43) Veröffentlichungstag der Anmeldung: 19.01.2005
(73) Patentinhaber: ATMEL Germany GmbH, 74072 Heilbronn (DE)
(72) Erfinder: Fischer, Martin, 74629 Gleichen (DE); Friedrich, Ulrich, 74248 Ellhofen (DE); Karthaus, Udo, 89079 Ulm (DE)

(56) Entgegenhaltungen:
- EP-A- 1 120 734
- EP-A- 1 326 202
- FR-A- 2 644 308
- US-A- 5 206 639

## Beschreibung

Die Erfindung bezieht sich auf eine Schaltungsanordnung zur Phasenmodulation für rückstreubasierte Transponder nach dem Oberbegriff des Anspruchs 1 sowie auf ein zugehöriges Verfahren.

Systeme, bei denen zwischen einer oder mehreren Basisstationen bzw. Lesegeräten und einem oder mehreren sogenannten Transpondern draht- bzw. kontaktlos Daten übertragen werden, werden z.B. als kontaktlose Identifikationssysteme oder sogenannte Radio-Frequency-Identification(RFID)-Systeme eingesetzt. Auf dem Transponder können auch Sensoren, beispielsweise zur Temperaturmessung, integriert sein. Derartige Transponder werden auch als Remote-Sensören bezeichnet. Die Transponder bzw. deren Sende- und Empfangseinrichtungen verfügen üblicherweise nicht über einen aktiven Sender für die Datenübertragung zur Basisstation. Bei derartigen nicht aktiven Systemen, die als passive Systeme bezeichnet werden, wenn sie keine eigene Energieversorgung aufweisen, und als semipassive Systeme bezeichnet werden, wenn sie eine eigene Energieversorgung aufweisen, wird zur Datenübertragung bei Entfernungen von deutlich mehr als einem Meter in Verbindung mit UHF oder Mikrowellen in der Regel die sogenannte Backscatter- oder Rückstreukopplung eingesetzt. Hierzu werden von der Basisstation elektromagnetische Wellen emittiert, die durch die Sendeund Empfangseinrichtung des Transponders entsprechend den an die Basisstation zu übertragenden Daten mit einem Modulationsverfahren moduliert und reflektiert werden. Dies geschieht im allgemeinen durch eine Eingangsimpedanzänderung der Sende- und Empfangseinrichtung, die eine Veränderung der Reflexionseigenschaften einer daran angeschlossenen Antenne bewirkt. Hierfür sind unterschiedliche Verfahren bekannt.

Bei einem ersten Verfahrenstyp, der beispielsweise in der EP 1 211 635 A2 beschrieben ist, wird der Realteil der Eingangsimpedanz durch Zu- bzw. Abschalten einer im wesentlichen ohmschen Last verändert, wodurch hauptsächlich eine Amplitudenänderung oder Amplitudenmodulation der reflektierten Wellen bewirkt wird. Dieses Modulationsverfahren wird als Amplitudentastung (ASK) bezeichnet. Die ohmsche Last belastet als zusätzlicher Verbraucher die Spannungsversorgung des Transponders, wodurch die maximal überbrückbare Entfernung zwischen Transponder und Basisstation, insbesondere bei passiven Transpondern ohne eigene Energieversorgung, erheblich verringert wird.

Bei einem zweiten Verfahrenstyp wird der Imaginärteil der Eingangsimpedanz durch Veränderung der Kapazität eines Kondenstors im Eingangskreis der Sende- und Empfangseinrichtung beeinflusst, wodurch hauptsächlich eine Phasenänderung oder Phasenmodulation der reflektierten Wellen bewirkt wird. Dieses Modulationsverfahren wird als Phasenumtastung (PSK) bezeichnet. Im Vergleich zur ASK beeinflusst dieses Modulationsverfahren die Betriebsspannung praktisch nicht, wodurch ein hoher Wirkungsgrad des Transponders erzielbar ist und die maximal überbrückbare Entfernung zwischen Transponder und Basisstation zunimmt.

Eine zur Durchführung eines derartiges Verfahrens geeignete Schaltungsanordnung ist beispielsweise in der älteren deutschen Patentanmeldung 10158442.3 der Anmelderin dargestellt. Hierbei wird die Kapazitätsänderung im Eingangskreis mit Hilfe eines Varaktors bewerkstelligt, der durch Varaktorsteuerungsmittel in Form einer steuerbaren Spannungsquelle mit einer Steuerspannung zur Veränderung seiner Kapazität beaufschlagt wird.

Der Erfindung liegt als technisches Problem die Bereitstellung einer Schaltungsanordnung sowie eines zugehörigen Verfahrens zugrunde, die eine einfache Ansteuerbarkeit des Varaktors gewährleisten, kostengünstig realisierbar sind und den Kapazitätshub des Varaktors derart ausnutzen, dass eine sichere Datenübertragung gewährleistet werden kann.

Die Erfindung löst dieses Problem durch die Bereitstellung einer Schaltungsanordnung mit den Merkmalen des Anspruchs 1 und eines Verfahrens mit den Merkmalen des Anspruchs 8.

Erfindungsgemäß umfassen die Varaktorsteuerungsmittel zur Erzeugung der Steuerspannung mindestens zwei Spannungsquellen, Schaltmittel und eine Steuereinheit, welche die Spannungsquellen wahlweise in Abhängigkeit von der zu erzeugenden Phasenlage durch die Schaltmittel mit mindestens einem Anschluss des Varaktors verbindet. Bei einer derartigen Realisierung kann auf eine steuerbare Spannungsquelle zur Erzeugung der Steuerspannung verzichtet werden, die im Vergleich zur erfindungsgemäßen Lösung schaltungstechnisch aufwendiger zu realisieren ist. Dies führt folglich zu einer kostengünstigeren Lösung, die zudem eine hohe Übertragungssicherheit gewährleistet.

In einer Weiterbildung der Schaltungsanordnung nach Anspruch 2 weist der Varaktor eine Kennlinie auf, die symmetrisch zur Nullspannung ist. Derartige Varaktoren sind einfach herzustellen und ermöglichen bei geeigneter Ansteuerung einen großen Kapazitätshub.

In einer Weiterbildung der Schaltungsanordnung nach Anspruch 3 sind die Schaltmittel hochohmige CMOS-Schalter. Derartige Schalter sind in einem Halbleiterprozess einfach zu implementieren und gewährleisten eine geringe Belastung des Eingangskreises durch parasitäre Komponenten.

In einer Weiterbildung der Schaltungsanordnung nach Anspruch 4 liefert eine der mindestens zwei Spannungsquellen die Massespannung und eine weitere der mindestens zwei Spannungsquellen eine Versorgungsspannung. Da diese Spannungsquellen zur Spannungsversorgung im Transponder üblicherweise bereits vorhanden sind, ist eine derartige Ausführung mit geringem zusätzlichen Aufwand realisierbar. Alternativ weisen gemäß Anspruch 5 die erste und die zweite Spannungsquelle eine umgekehrte Polarität auf, wodurch der Kapazitätshub des Varaktors gut nutzbar ist.

In einer Weiterbildung der Schaltungsanordnung nach Anspruch 6 sind im Eingangskreis zwischen zwei Antennenanschlüsse ein erster Kondensator, der Varaktor und ein zweiter Kondensator in Serie eingeschleift und jeder Anschluss des Varaktors ist über jeweils ein Schaltmittel wahlweise mit je einer der Spannungsquellen verbindbar. Mit Hilfe einer derartigen Schaltungsanordnung kann der Kapazitätshub des Varaktors ohne Erzeugung einer negativen Spannung ausgenutzt werden, da die Spannung am Varaktor durch geeignetes Schließen bzw. Öffnen der Schalter umgepolt werden kann.

In einer Weiterbildung der Schaltungsanordnung nach Anspruch 7 sind im Eingangskreis zwischen zwei Antennenanschlüsse ein erster Kondensator und der Varaktor in Serie eingeschleift und ein Anschluss des Varaktors ist über ein erstes Schaltmittel mit einer ersten Spannungsquelle und über ein zweites Schaltmittel mit einer zweiten Spannungsquelle verbunden. Pro Spannungsquelle kann eine zugehörige Phasenlage bzw. einen Phasenwinkel erzeugt werden, also insgesamt zwei Phasenwinkel. Selbstverständlich können durch Hinzufügen weiterer Spannungsquellen und zugeordneter Schaltmittel weitere Phasenwinkel erzeugt werden.

Bei dem erfindungsgemäßen Verfahren nach Anspruch 8 werden zur Erzeugung der Steuerspannung mindestens zwei Spannungsquellen wahlweise in Abhängigkeit von der zu erzeugenden Phasenlage mit mindestens einem Anschluss des Varaktors verbunden.

In einer Weiterbildung des Verfahrens nach Anspruch 9 werden zur Erzeugung einer ersten Phasenlage ein erster Anschluss des Varaktors mit einer ersten der mindestens zwei Spannungsquellen und ein zweiter Anschluss mit einer zweiten der mindestens zwei Spannungsquellen verbunden und zur Erzeugung einer zweiten Phasenlage werden der erste. Anschluss des Varaktors mit der zweiten der mindestens zwei Spannungsquellen und der zweite Anschluss mit der ersten der mindestens zwei Spannungsquellen verbunden. Auf diese Weise erfolgt ein Umpolen der Steuerspannung am Varaktor, wodurch dessen Kapazitätshub, insbesondere bei Varaktor-Typen mit einer Kennlinie symmetrisch zur Nullspannung; gut ausgenutzt wird.

Vorteilhafterweise werden gemäß Anspruch 10 zur Erzeugung einer dritten Phasenlage die Anschlüsse des Varaktors mit einer der mindestens zwei Spannungsquellen verbunden. Die resultierende Potentialdifferenz am Varaktor beträgt hierbei OV, wodurch sich eine entsprechende Varaktor-Kapazität und eine zugehörige Phasenlage einstellt.

In einer Weiterbildung des Verfahrens nach Anspruch 11 wird zur Erzeugung einer ersten Phasenlage ein Anschluss des Varaktors mit einer ersten der mindestens zwei Spannungsquellen verbunden und zur Erzeugung einer zweiten Phasenlage wird der Anschluss des Varaktors mit der zweiten der mindestens zwei Spannungsquellen verbunden. Vorteilhafterweise weisen die erste und die zweite Spannungsquelle eine umgekehrte Polarität auf, wodurch der Kapazitätshub des Varaktors gut nutzbar ist.

Vorteilhafte Ausführungsformen der Erfindung sind in den Zeichnungen dargestellt und werden nachfolgend beschrieben. Hierbei zeigen:
- Fig. 1: ein schematisches Schaltbild einer ersten erfindungsgemäßen Schaltungsanordnung zur Phasenmodulation für rückstreubasierte Transponder,
- Fig. 2: eine Kennlinie eines CMOS-Varaktors von Fig. 1 und
- Fig. 3: ein schematisches Schaltbild einer zweiten erfindungsgemäßen Schaltungsanordnung zur Phasenmodulation für rückstreubasierte Transponder.

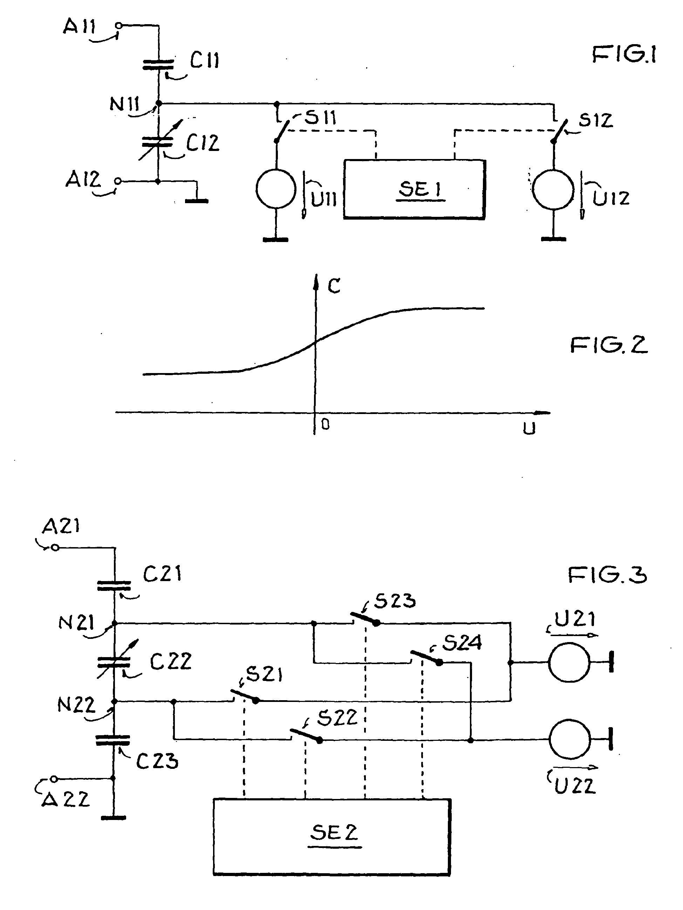

Fig. 1 zeigt ein schematisches Schaltbild einer Schaltungsanordnung zur Phasenmodulation, die Teil eines nicht gezeigten Eingangskreises eines Transponders ist. Die Schaltungsanordnung umfasst einen Kondensator C11 und einen CMOS-Varaktor C12, die zwischen Antennenanschlüsse A11 und A12 in Serie einschleift sind, eine erste Spannungsquelle U11 und eine zweite Spannungsquelle U12, die mit Schaltmitteln S11 und S12 in Form von hochohmigen CMOS-Schaltern mit einem Anschluss N11 des Varaktors gekoppelt sind, und eine Steuereinheit SE1 zur Ansteuerung der Schalter S11 und S12. Die Spannungsquellen U11 und U12, die Schalter S11 und S12 sowie die Steuereinheit SE1 bilden ein Varaktorsteuerungsmittel zur Erzeugung der Steuerspannung des Varaktors. Die Spannungsquellen U11 und U12 werden von der Steuereinheit SE1 in Abhängigkeit von der zu erzeugenden Phasenlage mit dem Anschluss N11 des Varaktors C12 verbunden. In Abhängigkeit von der Schalterstellung der Schalter S11 und S12 liegt folglich an dem Anschluss N11 des Varaktors C12 entweder die Spannung der Spannungsquelle U11 oder die Spannung der Spannungsquelle U12 an. U11 ist hierbei eine negative Spannung und U12 eine positive Spannung.

Fig. 2 zeigt die Kennlinie des CMOS-Varaktors C12, die im wesentlichen punktsymmetrisch zum Schnittpunkt der Kennlinie mit der Y-Achse ist. Aufgrund der unterschiedlichen Polaritäten der Spannungen U11 bzw. U12 ergibt sich eine hohe Kapazitätsdifferenz bzw. ein hoher Kapazitätshub des Varaktors. Die resultierenden Phasenlagen weisen folglich ebenfalls entsprechend große Unterschiede auf, so dass eine sichere Datenübertragung gewährleistet werden kann. Mit Hilfe der gezeigten Schaltungsanordnung können zwei unterschiedliche Phasenlagen bzw. Phasenwinkel erzeugt werden. Selbstverständlich können durch Hinzufügen weiterer Spannungsquellen und zugehöriger Schalter weitere Phasenlagen erzeugt werden.

Fig. 3 zeigt ein schematisches Schaltbild einer zweiten erfindungsgemäßen Schaltungsanordnung zur Phasenmodulation für rückstreubasierte Transponder. Die Schaltungsanordnung umfasst einen Kondensator C21, einen Varaktor C22 und einen Kondensator C23, die in Serie zwischen Antennenanschlüsse A21 und A22 eingeschleift sind, eine erste Spannungsquelle U21 und eine zweite Spannungsquelle U22, die mit den Anschlüssen N21 und N22 des Varaktors C22 über Schalter S21, S22, S23 und S24 gekoppelt sind, und eine Steuereinheit SE2 zur Ansteuerung der Schalter S21, S22, S23 und S24. Wenn der Varaktor C22 als entsprechend beschalteter Feldeffekt-Transistor ausgeführt ist, kann der Anschluss N21 beispielsweise ein Gate-Anschluss und der Anschluss N22 ein Drain/Source-Anschluss des Feldeffekt-Transistors sein. Die Spannungsquelle U21 liefert die Massespannung und die Spannungsquelle U22 liefert eine Versorgungsspannung, die gleichzeitig zur Versorgung des Transponders dienen kann. Die Kennlinie des Varaktors C22 ist identisch zu der in Fig. 2 gezeigten Kennlinie des Varaktors C12 von Fig. 1.

Zur Erzeugung einer ersten Phasenlage werden die Schalter S23 und S22 geschlossen und die Schalter S21 und S24 geöffnet. Aufgrund dieser Schalterstellung wird der Knoten N21 mit der Spannungsquelle U21 und der Knoten N22 mit der Spannungsquelle U22 verbunden. Die resultierende Spannungsdifferenz am Varaktor C22 ergibt sich aus der Differenz der Spannungswerte der beiden Spannungsquellen U21 und U22. Da U21 die Massespannung und U22 die Versorgungsspannung liefert, liegt folglich zwischen den Anschlüssen N21 und N22 die Versorgungsspannung an. Der zugehörige Kapazitätswert des Varaktors C22 ergibt sich gemäß der in Fig. 2 gezeigten Kennlinie. Ein Kurzschluss höherfrequenter Empfangssignale über die Schalter gegen Masse bzw. Versorgungsspannung tritt aufgrund der Hochohmigkeit der Schalter S21, S22, S23 bzw. S24 nicht auf. Eine DC-Entkopplung der Spannungsquellen U21 bzw. U22 gegenüber anderen Schaltungsteilen wird durch die Kondensatoren C21 bzw. C23 erzielt.

Zur Erzeugung einer zweiten Phasenlage werden die Schalter S23 und S22 geöffnet und die Schalter S21 und S24 geschlossen. Aufgrund dieser Schalterstellung wird der Knoten N21 mit der Spannungsquelle U22 und der Knoten N22 mit der Spannungsquelle U21 verbunden. Die resultierende Spannungsdifferenz am Varaktor ist im Vergleich zur zuvor beschriebenen Schalterstellung invertiert. Dies ermöglicht in Kombination mit der symmetrischen Kennlinie eine optimale Ausnutzung des Kapazitätshubes des Varaktors C22 ohne die Erzeugung einer negativen Spannung, da die Kapazität des CMOS-Varaktors im wesentlichen nur von der Spannung und der Polarität der zwischen den Anschlussknoten N21 und N22 anliegenden Spannung abhängt.

Zur Erzeugung einer dritten Phasenlage werden die Anschlüsse des Varaktors N21 und N22 mit einer der Spannungsquellen U21 oder U22 verbunden. Dies wird einerseits durch Schließen der Schalter S23 und S21 und Öffnen der Schalter S24 und S22 oder andererseits durch Öffnen der Schalter S23 und S21 und Schließen der Schalter S24 und S22 erreicht. Die resultierende Spannungsdifferenz am Varaktor C22 ist hierbei 0V.

Die gezeigten Ausführungsformen ermöglichen eine einfache Ansteuerung des Varaktors C22 mit Hilfe geschalteter Spannungsquellen zur Erzeugung der Steuerspannung ohne Verwendung einer schaltungstechnisch aufwendiger zu realisierenden steuerbaren Spannungsquelle. Der zur Verfügung stehende Kapazitätshub des Varaktors wird optimal ausgenutzt, so dass eine sichere Datenübertragung gewährleistet werden kann. Durch geeignete Ansteuerung bzw. Wahl der Anzahl der Spannungsquellen ist es weiterhin möglich, mehr als zwei Phasenlagen zu erzeugen.

## Patentansprüche

1. Schaltungsanordnung zur Phasenmodulation für rückstreubasierte Transponder durch Eingangsimpedanzänderung eines Eingangskreises des Transponders, mit
- einem Varaktor (C12, C22) im Eingangskreis des Transponders und
- Varaktorsteuerungsmitteln, um den Varaktor (C12, C22) mit einer Steuerspannung zur Veränderung seiner Kapazität zu beaufschlagen,
**dadurch gekennzeichnet, dass**
- die Varaktorsteuerungsmittel zur Erzeugung der Steuerspannung mindestens zwei Spannungsquellen (U11, U12, U21, U22), Schaltmittel (S11, S12, S21, S22, S23, S24) und eine Steuereinheit (SE1, SE2) umfassen, welche die Spannungsquellen (U11, U12, U21, U22) wahlweise in Abhängigkeit von der zu erzeugenden Phasenlage durch die Schaltmittel (S11, S12, S21, S22, S23, S24) mit mindestens einem Anschluss (N11, N21, N22) des Varaktors (C12, C22) verbindet.

2. Schaltungsanordnung nach Anspruch 1, **dadurch gekennzeichnet, dass** der Varaktor (C12, C22) eine Kennlinie aufweist, die symmetrisch zur Nullspannung ist.

3. Schaltungsanordnung nach Anspruch 1 oder 2, **dadurch gekennzeichnet, dass** die Schaltmittel hochohmige CMOS-Schalter (S11, S12, S21, S22, S23, S24) sind.

4. Schaltungsanordnung nach einem der vorhergehenden Ansprüche, **dadurch gekennzeichnet, dass** eine (U21) der mindestens zwei Spannungsquellen (U21, U22) die Massespannung liefert und eine weitere (U22) der mindestens zwei Spannungsquellen (U21, U22) eine Versorgungsspannung liefert.

5. Schaltungsanordnung nach einem der Ansprüche 1 bis 3, **dadurch gekennzeichnet, dass** eine (U11) der mindestens zwei Spannungsquellen (U11, U12) und eine weitere (U12) der mindestens zwei Spannungsquellen (U21, U22) eine umgekehrte Polarität aufweisen.

6. Schaltungsanordnung nach einem der vorhergehenden Ansprüche, **dadurch gekennzeichnet, dass** im Eingangskreis zwischen zwei Antennenanschlüsse (A21, A22) ein erster Kondensator (C21), der Varaktor (C22) und ein zweiter Kondensator (C23) in Serie eingeschleift sind und jeder Anschluss (N21, N22) des Varaktors (C22) über jeweils ein Schaltmittel (S21, S22, S23, S24) wahlweise mit je einer der Spannungsquellen (U21, U22) verbindbar ist.

7. Schaltungsanordnung nach einem der vorhergehenden Ansprüche, **dadurch gekennzeichnet, dass** im Eingangskreis zwischen zwei Antennenanschlüsse (A11, A12) ein erster Kondensator (C11) und der Varaktor (C12) in Serie eingeschleift sind und ein Anschluss (N11) des Varaktors (C12) über ein erstes Schaltmittel (S11) mit einer ersten Spannungsquelle (U11) verbunden und über ein zweites Schaltmittel (S12) mit einer zweiten Spannungsquelle (U12) verbindbar ist.

8. Verfahren zur Phasenmodulation für rückstreubasierte Transponder durch Eingangsimpedanzänderung eines Eingangskreises des Transponders, wobei zur Eingangsimpedanzänderung die Kapazität eines Varaktors (C12, C22) im Eingangskreis durch Beaufschlagen seiner Anschlüsse (N 11, N21, N22) mit einer Steuerspannung verändert wird,
**dadurch gekennzeichnet, dass**
zur Erzeugung der Steuerspannung mindestens zwei Spannungsquellen (U11, U12, U21, U22) wahlweise in Abhängigkeit von der zu erzeugenden Phasenlage mit mindestens einem Anschluss (N11, N21, N22) des Varaktors (C12, C22) verbunden werden.

9. Verfahren nach Anspruch 8, **dadurch gekennzeichnet, dass** zur Erzeugung einer ersten Phasenlage ein erster Anschluss (N21) des Varaktors mit einer ersten (U21) der mindestens zwei Spannungsquellen (U21, U22) und ein zweiter Anschluss (N22) mit einer zweiten (U22) der mindestens zwei Spannungsquellen (U21, U22) verbunden werden und zur Erzeugung einer zweiten Phasenlage der erste Anschluss (N21) des Varaktors (C22) mit der zweiten (U22) der mindestens zwei Spannungsquellen (U21, U22) und der zweite Anschluss (N22) mit der ersten (U21) der mindestens zwei Spannungsquellen (U21, U22) verbunden werden.

10. Verfahren nach Anspruch 9, **dadurch gekennzeichnet, dass** zur Erzeugung einer dritten Phasenlage beide Anschlüsse des Varaktors (C22) mit einer der mindestens zwei Spannungsquellen (U21, U22) verbunden werden.

11. Verfahren nach Anspruch 8, **dadurch gekennzeichnet, dass** zur Erzeugung einer ersten Phasenlage ein Anschluss (N11) des Varaktors (C22) mit einer ersten (U11) der mindestens zwei Spannungsquellen (U11, U12) verbunden wird und zur Erzeugung einer zweiten Phasenlage der Anschluss (N11) des Varaktors (C12) mit der zweiten (U12) der mindestens zwei Spannungsquellen (U11, U12) verbunden wird.

## Claims

1. Circuit arrangement for phase modulation for backscatter-based transponders by input impedance change of an input circuit of the transponder, with
a varactor (C12, C22) in the input circuit of the transponder and
- varactor control means in order to act on the varactor (C12, C22) by a control voltage for change in the capacitance thereof,
**characterised in that**
- the varactor control means comprises for generation of the control voltage at least two voltage sources (U11, U12, U21, U22), switching means (S11, S12, S21, S22, S23, S24) and a control unit (SE1, SE2), which selectably connect the voltage sources (U11, U12, U21, U22) with at least one connection (N11, N21, N22) of the varactor (C12, C22) in dependence on the phase position, which is to be produced, by the switching means (S11, S12, S21, S22, S23, S24).

2. Circuit arrangement according to claim 1, **characterised in that** the varactor (C12, C22) has a characteristic curve which is symmetrical with respect to zero voltage.

3. Circuit arrangement according to claim 1 or 2, **characterised in that** the switching means are high-resistance CMOS switches (S11, S12, S21, S22, S23, S24).

4. Circuit arrangement according to one of the preceding claims, **characterised in that** one (U21) of the at least two voltage sources (U21, U22) delivers ground voltage and a further one (U22) of the at least two voltage sources (U21, U22) delivers a supply voltage.

5. Circuit arrangement according to one of claims 1 to 3, **characterised in that** one (U11) of the at least two voltage sources (U11, U12) and a further one (U12) of the at least two voltage sources (U21, U22) have a reversed polarity.

6. Circuit arrangement according to one of the preceding claims, **characterised in that** a first capacitor (C21), the varactor (C22) and a second capacitor (23) are connected in series in the input circuit between two antenna connections (A21, A22) and each connection (N21, N22) of the varactor (C22) is selectably connectible with a respective one of the voltage sources (U21, U22) by way of a respective switching means (S21, S22, S23, S24).

7. Circuit arrangement according to one of the preceding claims, **characterised in that** a first capacitor (C11) and the varactor (C12) are connected in series in the input circuit between two antenna connections (A11, A12) and a connection (N11) of the varactor (C12) is connected with a first voltage source (U11) by way of a first switching means (S11) and is connectible with a second voltage source (U12) by way of a second switching means (S12).

8. Method for phase modulation for backscatter-based transponders by input impedance change of an input circuit of the transponder, wherein for the input impedance change the capacitance of a varactor (C12, C22) in the input circuit is changed by acting on its connections (N11, N21, N22) with a control voltage, **characterised in that** for producing the control voltage at least two voltage sources (U11, U12, U21, U22) are selectably connected with at least one connection (N11, N21, N22) of the varactor (C12, C22) in dependence on the phase position to be produced.

9. Method according to claim 8, **characterised in that** for producing a first phase position a first connection (N21) of the varactor is connected with a first one (U21) of the at least two voltage sources (U21, U22) and a second connection (N22) with a second one (U22) of the at least two voltage sources (U21, U22) and for producing a second phase position the first connection (N21) of the varactor (C22) is connected with the second one (U22) of the at least two voltage sources (U21, U22) and the second connection (N22) with the first one (U21) of the at least two voltage sources (U21, U22).

10. Method according to claim 9, **characterised in that** for producing a third phase position both connections of the varactor (C22) are connected with one of the at least two voltage sources (U21, U22).

11. Method according to claim 8, **characterised in that** for producing a first phase position a connection (N11) of the varactor (C22) is connected with a first one (U11) of the at least two voltage sources (U11, U12) and for producing a second phase position the connection (N11) of the varactor (C12) is connected with the second one (U12) of the at least two voltage sources (U11, U12).

## Revendications

1. Circuit de modulation de phase pour un transpondeur basé sur la rétro-diffusion par une modification d'impédance d'entrée d'un circuit d'entrée du transpondeur, comprenant :
. un varactor (C12, C22) dans le circuit d'entrée du transpondeur et
. des moyens de commande du varactor pour alimenter le varactor (C12, C22) sous une tension de commande afin de modifier sa capacité,
**caractérisé en ce que** :
. les moyens de commande du varactor pour générer la tension de commande comprennent au moins deux sources de tension (U11, U12, U21, U22), des moyens de commutation (S11, S12, S21, S22, S23, S24) et une unité de commande (SE1, SE2) qui relie de manière sélective, en fonction de la position de phase à générer par les moyens de commutation (S11, S12, S21, S22, S23, S24), les sources de tension (U11, U12, U21, U22) à au moins une connexion (N11, N21, N22) du varactor (C12, C22).

2. Circuit selon la revendication 1, **caractérisé en ce que** le varactor (C12, C22) présente une courbe caractéristique symétrique à la tension zéro.

3. Circuit selon la revendication 1 ou 2, **caractérisé en ce que** les moyens de commutation sont des commutateurs à circuit intégré CMOS (S11, S12, S21, S22, S23, S24) à grande résistance ohmique.

4. Circuit selon l'une quelconque des revendications précédentes, **caractérisé en ce que** l'une (U21) des au moins deux sources de tension (U21, U22) délivre la tension de masse et **en ce qu'**une autre (U22) des au moins deux sources de tension (U21, U22) délivre une tension d'alimentation.

5. Circuit selon l'une quelconque des revendications 1 à 3, **caractérisé en ce que** l'une (U11) des au moins deux sources de tension (U11, U12) et une autre (U12) des au moins deux sources de tension (U21, U22) présentent une polarité inversée.

6. Circuit selon l'une quelconque des revendications précédentes, **caractérisé en ce qu'**un premier condensateur (C21), le varactor (C22) et un deuxième condensateur (C23) sont insérés en série dans le circuit d'entrée entre deux bornes d'antenne (A21, A22), et **en ce que** chaque connexion (N21, N22) du varactor (C22) peut être reliée à chaque fois par l'intermédiaire d'un moyen de commutation (S21, S22, S23, S24) de manière sélective à chaque fois à l'une des sources de tension (U21, U22).

7. Circuit selon l'une quelconque des revendications précédentes, **caractérisé en ce que** qu'un premier condensateur (C11) et le varactor (C12) sont insérés en série dans le circuit d'entrée entre deux bornes d'antenne (A11, A12) et **en ce qu'**une connexion (N11) du varactor (C12) est reliée par l'intermédiaire d'un premier moyen de commutation (S11) à une première source de tension (U11) et peut être relié par un deuxième moyen de commutation (S12) à une deuxième source de tension (U12).

8. Procédé de modulation de phase de transpondeurs basés sur la rétro-diffusion par une modification d'impédance d'entrée d'un circuit d'entrée du transpondeur, dans lequel, pour modifier l'impédance d'entrée, on modifie la capacité d'un varactor (C12, C22) dans le circuit d'entrée en alimentant ses connexions (N11, N21, N22) sous une tension de commande, **caractérisé en ce que**, pour générer la tension de commande, on relie au moins deux sources de tension (U11, U12, U21, U22) de manière sélective, en fonction de la position de phase à générer, à au moins une connexion (N11, N21, N22) du varactor (C12, C22).

9. Procédé selon la revendication 8, **caractérisé en ce que** pour générer une première position de phase, on relie une première connexion (N21) du varactor à une première (U21) des au moins deus sources de tension (U21, U22) et une deuxième connexion (N22) à une deuxième (U22) des au moins deux sources de tension (U21, U22), et **en ce que** pour générer une deuxième position de phase, on relie la première connexion (N21) du varactor (C22) à la deuxième (U22) des au moins deux sources de tension (U21, U22), et la deuxième connexion (N22) à la première (U21) des au moins deux sources de tension (U21, U22).

10. Procédé selon la revendication 9, **caractérisé en ce que** pour générer une troisième position de phase, les deux connexions du varactor (C22) sont reliées à l'une des au moins deux sources de tension (U21, U22).

11. Procédé selon la revendication 8, **caractérisé en ce que** pour générer une première position de phase, on relie une connexion (N11) du varactor (C22) à une première (U11) des au moins deux sources de tension (U11, U12) et **en ce que** pour générer une deuxième position de phase, on relie la connexion (N11) du varactor (C12) à la deuxième (U12) des au moins deux sources de tension (U11, U12).
